# EUROPEAN PATENT SPECIFICATION

(11) **EP 3 610 438 B1**
(45) Date of publication and mention of the grant of the patent: **07.06.2023**
(21) Application number: 18721959.7
(22) Date of filing: 10.04.2018
(51) Int. Cl.: G06Q 20/12

(54) **SYSTEM FOR EFFECTING FINANCIAL TRANSACTIONS BETWEEN A FIRST PARTY AND A SECOND PARTY**
SYSTEM ZUR DURCHFÜHRUNG VON FINANZTRANSAKTIONEN ZWISCHEN EINEM ERSTEN TEILNEHMER UND EINEM ZWEITEN TEILNEHMER
SYSTÈME POUR EFFECTUER DES TRANSACTIONS FINANCIÈRES ENTRE UNE PREMIÈRE PARTIE ET UNE SECONDE PARTIE

(30) Priority: 10.04.2017 CH 4792017
(43) Date of publication of application: 19.02.2020
(73) Proprietor: Sonect AG, 8008 Zürich (CH)
(72) Inventor: CHAKRABORTY, Sandipan, 8306 Brüttisellen (CH); BÜRGEL, Sebastian, 6300 Zug (CH)
(74) Representative: Keller Schneider Patent- und Markenanwälte AG
(86) International application number: PCT/EP2018/059138
(87) International publication number: WO 2018/189163

(56) References cited:
- EP-A2- 1 408 444
- US-A1- 2006 294 005
- US-A1- 2008 046 362
- US-A1- 2014 052 553
- US-A1- 2015 081 567

## Description

### Technical Field

The invention relates to a method for effecting financial transactions between a first party and a second party.

### Background Art

Today, credit cards are one of the most important payment instruments. Inter alia, they are used for payments at the point-of-sale (POS), for cash withdrawals at ATMs or for payments in online shops (e-commerce). Credit cards are widely accepted and their use is easy. However, there are several drawbacks. Inter alia, fees to be paid by the credit card holder and/or the merchants and banks involved are considerable. Partly, this is due to the fact that several service providers are involved in a credit card payment, namely the card issuer, the card association as well as the acquiring bank. The fees include basic fees (such as the card administration fee usually paid by the card holder) as well as transaction based fees (such as the interchange fee collected by the card issuer and the processing fee collected by the acquiring bank, a part of the fees being delivered to the card network providers).

Furthermore, it is a basic characteristic of a credit card system that there are separate flows of information and money, and there is no instant settlement of a trade. In addition, there is no direct connection (common ledger) between the issuing bank and the acquiring bank. These are further factors generating costs that have to be borne by the users of the system.

Several alternatives have been proposed. Among those, systems where mobile devices of users are employed to enable payments to physical or online merchants.

As an example, US 7,873,573 B2 (Obopay) relates to systems and techniques for effectuating financial transactions via mobile devices. A virtual pooled account is used in operating a system having multiple financial partners. An app or an SMS interface may be used. The payer may use the camera function on the mobile device to acquire an image that identifies the payee, similarly, the payer may be identified by the payee using an acquired image, e. g. an image showing a bar code. The described system interacts with different APIs of different financial partners to initiate payments for the users. Different user states are provided, in particular based on a level of participation. Corresponding restrictions or limits may be set on the accounts. The settlement between partner banks may be performed in a batch mode, e. g. once every 24 hours.

US 2015/242825 A1 (P. Burton Mills) relates to the generation, storage and validation of encrypted electronic currency using electronic devices such as laptops, mobile phones, tablets etc. The user may use electronic currency to pay for the goods or services of a merchant. The merchant system transfers the electronic currency to a server system; if the currency units are found to be valid the server may transmit an equivalent amount of electronic funds (such as sovereign currency) to the merchant's bank account. The server is able to send withdrawal requests to a financial institution system associated with the user in order to transfer funds from the user's account to an account associated with the server system. After receipt of these funds, the server system generates encrypted electronic currency units. It is these currency units that are then transferred to the merchant system. In order to request additional electronic currency from the user's device this device may scan a visual code (such as bar code or QR code) displayed by the merchant system. Electronic currency units may be deleted if acceptance of the units is refused by the merchant system.

These systems provide improvements with respect to some of the drawbacks of known payment means. Nevertheless, they are rather complicated. As an example, in the context of the system described in US 2015/242825 it is necessary that the server system, the merchant system as well as the client system handle electronic currency. Document US 2006/294005 A1 relates to a computer-implemented system for performing financial transactions wherein transfer requests between different electronic payment systems are facilitated by temporarily storing a transfer amount in electronic currency in a virtual account of a sender and transferring the amount from the virtual account to a brokerage account associated with a destination payment system. Finally, the amount is transferred from the brokerage account to the receiver account. Document US 2015/081567 A1 discloses an electronic payment system which allows peer to peer transactions between persons by using electronic tokens. During a transaction the ownership of an electronic token is changed by having the seller encrypting the token with the seller's public key. Document EP 1 408 444 A2 relates to a system for generating a barcode that is both machine-readable and identifiable by a human. The barcode may be applied to a document and can be used for verifying the authenticity of a document. Document US 2008/046362 A1 discloses a payment system where a payment transaction is performed by transferring an amount of electronic cash corresponding to the transaction amount from a purchaser account to a merchant account. In addition, a transfer of the transaction amount in fiat currency is made from the purchaser account to a pooled account and in case the merchant converts the received electronic cash into fiat currency, a corresponding transfer from the pooled account to the merchant's bank account is made. Document US 2014/052553 A1 relates to a system for performing cash withdrawals at a point of sale terminal of a merchant in context of a purchase transaction. A customer purchasing goods at the merchant and using his credit card for the payment is offered the possibility to also perform a cash withdrawal which leads to a transmission of an aggregated transaction amount (purchase price and withdrawal amount) to the acquirer system of the merchant which forwards the transaction for approval to the issuer system relating to the credit card. Document US 2013/151419 A1 discloses a verification method for a point of sale system wherein a purchase transaction is transmitted from a mobile device of a user to a network-accessible point-of-sale device which returns a payment receipt including validation data, which may comprise an image, to the mobile device and to a merchant computing device. By displaying the receipt on both the mobile device of the user and the merchant computing device, the merchant can verify that the user paid for the good or service indicated on the receipt. Document US 2015/332258 A1 discloses a system for establishing a communication session between two electronic devices wherein a public key is sent from the first device to the second device over a secure channel and the second device encrypts sensitive information with said public key and transmits the encrypted information to the first device using an insecure communication channel.

### Summary of the invention

It is the object of the invention to create a method for effecting financial transactions between a first party and a second party that are secure, reliable and cost-effective.

The solution of the invention is specified by the features of claim 1.

According to the invention, the method for effecting financial transactions between a first party and a second party comprises the steps of:
a) receiving a transaction request from the first party including an identification of the second party and a transaction amount;
b) initiating a first fiat money payment from a bank account of the first party to a pass-through bank account of a service provider;
c) adding an amount of electronic currency corresponding to the fiat money payment to a first e-money account assigned to the first party;
d) authenticating the first party vis-a-vis the second party, wherein authenticating the first party vis-a-vis the second party includes the steps of:
   - sending a public key assigned to the second party and a reference to a random image in an image store to the first party;
   - encrypting the reference using the public key assigned to the second party;
   - sending the encrypted reference to the second party;
   - decrypting the encrypted reference using a private key assigned to the second party;
   - comparing an image displayed on a device of the first party, based on the reference received by the first party, and an image displayed on a device of the second party, based on the decrypted reference;
e) transferring the amount of electronic currency to a second e-money account assigned to the second party; and
f) initiating a second fiat money payment from the pass-through bank account of the service provider to a bank account of the second party, the amount corresponding to the amount of electronic currency and debiting the amount from the second e-money account; and
g) handing over cash money from the second party to the first party.

It is not required that the steps are performed in the indicated order. In particular, authentication of the first party may happen before initiating any fiat or e-money transfer. In certain cases, when there is a sufficient amount of electronic currency on the first e-money account, steps b) and c) may be omitted.

The first fiat money payment is initiated by accessing an API of a bank handling the bank account of the first party. The API interface may access a central server or it may be decentralized via a block chain.

On November 25, 2015, the Directive on Payment Services in the Internal Market II (PSD II; Directive 2015/2366) was adopted by the European Parliament and will enter into force on January 13, 2018. A major aspect of PSD II is the right for licensed third-party payment services providers (TPPs) to access payment accounts of customers having given explicit consent to the access. The bank maintaining the customer's payment account must grant TPPs access to account information of specific customers. The banks are required to provide an application programming interface (API) in its IT systems to enable the access by TPPs. This will substantially facilitate the implementation of the inventive system and allow for a quick and wide distribution of the system.

A system for effecting financial transactions between a first party and a second party comprises:
a) a pass-through bank account of a service provider for storing fiat money;
b) an API interface allowing for initiating payments from a bank account of the first party for storing fiat money to the pass-through bank account;
c) a first e-money account for storing electronic currency, the first e-money account being assigned to the first party;
d) a second e-money account for storing electronic currency, the second e-money account being assigned to the second party;
e) a first conversion module for generating electronic currency and storing the electronic currency in the first e-money account, the amount corresponding to a fiat money amount transferred from the bank account of the first party to the pass-through bank account;
f) an authentication module for authenticating the first party vis-a-vis the second party;
g) a transfer module for transferring electronic currency from the first e-money account to the second e-money account; and
h) a second conversion module for transferring a fiat money amount from the temporary bank account to a bank account of the second party and for debiting a corresponding amount of electronic currency from the second e-money account

Here, "module" denotes a functional element of a computer program or collection of computer programs. A module may be provided by one or several (sub)routines, functions, assemblies, packages, functions on decentralized systems such as block chain-based smart contracts etc. Several modules may be provided by the same computer system, or a single module may be provided by a number of interacting computer systems or components.

Basically, in the context of the system, consumers (first party) pay directly from their bank account to the merchant's (second party) bank account. Every time electronic currency (e-money, tokens) is issued corresponding fiat money is transferred "immediately" to the pass-through account by debiting consumer's account. Merchant's bank has the possibility of simply claiming the book money (anytime) from the pass-through account by exchanging the electronic currency (tokens).

Due to the immediate conversion of fiat money into electronic currency and back the assets of the first and the second party are always secured, either by fiat money or electronic currency owned by the respective party.

High network costs of existing payment rails are avoided, in particular in respect of payments of small amounts (micro payments). High collateral requirements are avoided as well as exchange of information means exchange of value. The number of players is reduced, and therefore the costs (and the fees to be borne by the users of the system) may be reduced.

Preferably, a second fiat money payment is initiated from the pass-through bank account of the service provider to a bank account of the second party, the amount corresponding to the amount of electronic currency and debiting the amount from the second e-money account. Accordingly, it is advantageous if the system comprises a second conversion module for transferring a fiat money amount from the temporary bank account to a bank account of the second party and for debiting a corresponding amount of electronic currency from the second e-money account.

Alternatively, the money stored in the system is kept flowing, i. e. the e-money held by the second party may be circulated further within the system and eventually passed to a third party.

Preferably, the first and second e-money account are based on a block chain, i. e. these accounts are associated with a block chain for the secured recordal of the electronic currency transactions. This provides inherent security of the transactions provided by private/public key signatures, proven to secure billion dollar transactions in public networks. Block chains provide maximum availability as only a fraction of the nodes need to be available at all times to allow for continuous service, therefore the ledger of transactions inside the block chain does not provide a single point of failure. Block chain systems are horizontally scalable (by adding further nodes), which allows for data replication and highly scalable read operations. There is integrated automated fail-over as a core-consensus algorithm ensures that all nodes in a network are always in sync.

The system and the inventive method may be based on a public as well as on a private block chain.

Preferably, the block chain is part of a smart contract system and issuance of electronic currency is restricted to a group of registered issuers. Thus it may be ensured that currency used within the system and method is issued by banks and financial intermediaries that comply with regulations in the affected jurisdictions. Accordingly, the system may be based on public block chains where the creation of electronic currency is not restricted to a small number of issuers known ab initio (such as banks or central banks).

The system comprises a first app interface for interaction with a first application running on a device of the first party and by a second app interface for interaction with a second application running on a device of the second party. The authentication module generates authentication information to be sent to the first application by the first app interface, and the transfer module generates a transfer confirmation to be sent to the second application by the second app interface.

The applications are running on mobile devices (such as smartphones or tablets of the first party), and on electronic cash register systems (of the second party). Both the first party (customer) and second party (merchant) may use the same mobile application (app) or different applications in order to access the system.

In particular, the authentication information is used if the first and the second party meet in the context of a transaction, e. g. at a point-of-sale (POS). The fact that the authentication information received at the first application (and possibly displayed on a display device by the first application) corresponds to the authentication information received at the second application (and possibly displayed on a display device by the second application) proves that the first party has initiated a payment to the second party.

The transfer module is part of a server system of the service provider.

The system comprises an image store, the authentication module comprises a first submodule for sending a public key assigned to the second party and a reference to a random image in the image store to the first party and a second submodule for receiving a reference encrypted using a public key, decrypting the encrypted reference and displaying an image referenced by the decrypted reference on a display device of the second party.

Accordingly, authenticating the first party vis-a-vis the second party includes the steps of:
- sending a public key assigned to the second party and a reference to a random image in an image store to the first party;
- encrypting the reference using the public key assigned to the second party;
- sending the encrypted reference to the second party;
- decrypting the encrypted reference using a private key assigned to the second party; and
- comparing an image displayed on a device of the first party, based on the reference received by the first party, and an image displayed on a device of the second party, based on the decrypted reference.

Identifying the first party by a random image is simple and the persons involved on behalf of the first as well as of the second party immediately understand how the authentication works and if authentication is successful or not.

Encrypting the reference using the public key of the second party ensures that third parties are not able to impersonate the sender of the transaction in order to obtain the return service (such as cash and/or goods or services) in lieu of the first party.

In an embodiment not according to the invention, the authentication information is represented by machine-readable code (such as 2d or 3d barcode or QR code). This allows for reading the authentication information display on one of the devices of a party using a reading device (such as a barcode reader or camera) of the other party.

Further possibilities of exchanging and comparing the authentication information are available such as based on sound or ultrasound.

The method includes the further step of handing over cash money from the second party to the first party. Accordingly, the second party serves as a "virtual" ATM. This allows for using the inventive system for cash withdrawals from local merchants such as bakeries, kiosks, bars or other shops, delivery services for food or other goods or even from private people.

This is very convenient for the customers, and merchants may reduce their costs for securely handling and storing considerable amounts of cash. Finally, banks do not need to set up and maintain a large number of ATMs.

Merchants have the ability to enable and to disable the virtual ATM service as they like and in accordance with their cash reserves.

In a certain embodiment, the method includes the step of assigning the first party to a POS terminal of the second party displaying information on a display of a device of the first party and recording the information by a device linked to the POS terminal.

This is advantageous in particular for bigger merchants with multiple cashiers, where not only the second party needs to be identified but also a specific location in premises operated by the second party, such as a specific cash desk.

In an embodiment not according to the invention, the consumer requests a cash withdrawal or pays for goods obtained from the merchant, the service provider's server detects the merchant to be a large retail store. Accordingly, instead of sending an image URL back, it initiates the generation of a barcode/QR code on a display of the consumer's device. The cashier at the store then scans the code by just pointing the bar code scanner and scanning it just like items purchased by consumers.

By scanning the OR code, tokens got exchanged between the consumer and the merchant's e-money accounts.

Other advantageous embodiments and combinations of features come out from the detailed description below and the totality of the claims.

### Brief description of the drawings

The drawings used to explain the embodiments show:
- Fig. 1: A block diagram of a system; and
- Fig. 2: a schematic representation of the flow of information and funds in the context of a method according to the invention.

In the figures, the same components are given the same reference symbols.

### Preferred embodiments

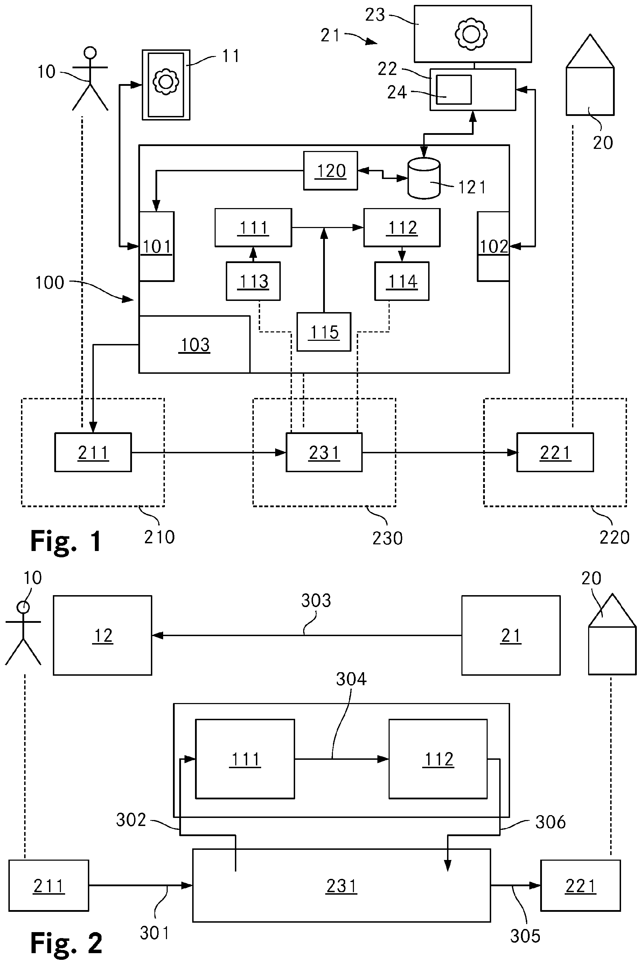

The Figure 1 shows a block diagram of a system. The service provider operating the inventive system is a mobile payment service provider. The system may be used by private persons or businesses.

A customer 10 operates a mobile device 11 such as a smartphone or tablet. A merchant 20 operates at least one cash desk 21 including a controller unit 22 as well as a display device 23. The controller unit 22 provides a decryption submodule 24. Both the mobile device 11 as well as the cash desk 21 communicate with a server 100 of the mobile payment service provider. For that purpose, the server 100 features application interfaces 101, 102. They are linked with the devices of the customer and merchant respectively by usual means for wide area data communication. In particular they communicate over the internet.

The server 100 further comprises an API interface 103 which allows for accessing an API provided by the customer's bank 210, offering access to functions relating to a bank account 211 of the customer 10. As mentioned above, bank APIs will be required to be opened by banks in the near future under the PSD2 directive.

The server 100 further comprises a database for the administration of block chain-based e-money accounts. The database stores reference data, whereas the transaction data and further financial data will be stored in a block chain. One of the accounts 111 is assigned to the customer 10, whereas another of the accounts 112 is assigned to the merchant 20. The database is accessed inter alia by conversion modules 113, 114 which allow for converting between fiat money stored on a bank account and electronic currency. For that purpose the conversion modules 113, 114 are provided the necessary access to bank accounts as well as to the database. In particular they access a pass-through bank account 231 in the name of the service provider, administrated by a bank 230.

A further bank account 221 of the merchant 20 is administrated by bank 220.

The server 100 further comprises a transfer module 115 which allows for transferring electronic currency between the e-money accounts 111, 112 administrated by the server 100 and based on a block chain-based smart contract system.

Finally, the server 100 comprises an authentication module 120 as well as an image database 121 that may be accessed by the authentication module 120 as well as over the internet, by providing a URL pointing to a specific image stored in the image database 121. The authentication module 120 is in data communication with the application interface 101 in order to send information to the mobile device 11 of the customer 10.

As mentioned, the e-money accounts 111, 112 are based on a block chain. Private block chains as well as public block chains are available and may be employed in the context of the described system. Private block chains are provided by service providers (such as e. g. Monax Industries) and users require a permission to access the block chain. Public block chains such as Ethereum are publicly available. In both cases storage and management of the block chain data is distributed on a large number of computers.

Natively, usual block chains do not provide anonymous transactions but only pseudo-anonymity: While it is not known which person controls a certain account, all transactions going to or from an account are visible to all nodes in the network. As such, they allow every node in the network to see all transactions which might then in combination with other observations be mapped to an individual user. Thus, when de-anonymizing a single address, the privacy of the funds held at that address and all transactions that this address is involved in are compromised. The observer can directly see in the block chain when the funds were transferred onto that address and when the user is next spending these funds. This allows the observer to monitor the financial assets controlled by the de-anonymized address in both past and future. An observer could for example observe a transaction of a single user standing next to them, e.g. in a shop. By observing 1) the time and 2) volume of the transaction in the shop and searching this transaction in the (potentially public) block chain, the observer might obtain the sender's and recipient's address. Even in a private block chain run by a consortium of banks, a single bank might not want the privacy of their customers get exposed to other banks. Concepts such as zero knowledge proofs or zkSNARKs solve such issues natively and implement them in present or upcoming platforms, such as e. g. Zcash or Hawk. Here, privacy is enhanced utilizing the centralization provided by a bank or financial intermediary as an anonymization tool of the spent funds:
A user will often receive funds which they prefer to keep in their wallet. In order to maintain privacy of these received funds, the user can submit those funds to their bank which credits the funds back to a different address owned by the same user. The receiving user can either inform their bank of the new address to which the funds are to be credited back in encrypted form or perform the same off-block chain (e.g. via Ethereum's Whisper network). For increased privacy, the user can request the transaction coming back from their bank to be 1) broken down into smaller batches and 2) those batches to be sent back over a period of time. In this way, an observer (potentially, a rouge bank in the network) could never infer the ownership of funds by matching incoming and outgoing transactions by amount and time.

Most block chain architectures provide a native token which are issued by the collective network and not just banks or central banks. In Bitcoin and Ethereum for example, the tokens called Bitcoin and Ether respectively, are issued in regular intervals by miners which are enforcing the security and integrity of the network. Also private block chains such as the one provided by Monax Industries, utilize tokens analog to Ether. These native tokens are used to assign (bond) access roles to accounts and prevent spam or DOS attacks.

In order to restrict the issuing ability of funds to banks and financial intermediaries in today's demanding compliance with regulatory requirements, the system relies on a list of registered issuer accounts. These accounts are able to create custom tokens inside the smart contract system as opposed to natively existing tokens such as Ether. As such, every issued token can always be linked to its issuing institution (bank or financial intermediary). The tokens can not only be associated with individual users as outlined in the previous section, but also, as they are issued by an institution for a specific customer, they can be monitored by that institution at all times. The access control of such fund-issuing accounts can be left in the hands of a regulator or national bank. This access control is analogous to granting an existing oversight account of a bank at a central bank's ledger.

Eventually, a user that received tokens might want to encash those tokens at their own bank, which might be different from the issuing bank of the tokens:

| | | | |
|---|---|---|---|
| consumer A: | 10 CHF | to bank A | (fiat transaction) |
| bank A: | 10 vCHF^{A} | to consumer A | (on block chain) |
| consumer A: | 10 vCHF^{A} | to consumer B | (on block chain) |
| consumer B: | 10 vCHF^{A} | to bank B | (on block chain) |

Since each token can be traced back to its issuing institution, the two banks can settle the tokens 1) inside or 2) outside the smart contract environment:
1. Settlement inside the smart contract happens as follows: Bank A receives 10 token from its users that want to cash out tokens that were originally issued by Bank B. Within the same timespan, Bank B receives 10 token issued by Bank A. These tokens could be automatically and immediately or on-demand settled inside the block chain. This requires all tokens to be marked by the issuing bank in a secure fashion.
2. Settlement outside the smart contract might be required if only Bank B received 10 tokens which were issued by Bank A. In this scenario settlement could be facilitated by a fiat money transaction of Bank A to Bank B which, upon receiving the funds, will destroy the tokens that were originally issued by Bank A. Below is a representation of such a scenario in which consumer A obtains tokens (vCHF) from their bank in exchange for fiat money which they then transfer to consumer B which is encashing them at their bank B:

| | | | |
|---|---|---|---|
| consumer B: | 10 vCHF^{A} | to bank B | (on block chain) |
| bank B: | 10 CHF | to consumer B | (fiat transaction) |
| bank A: | 10 CHF | to bank B | (fiat transaction) |
| bank B: | 10 vCHF^{A} | to token-eating black hole contract | |

The functioning of the inventive system is described in the following, based on Figures 1 and 2.

In order to use some functionalities of the system, users such as customers and merchants need to register with the system. The characteristics of the registration process depend on the jurisdiction, regulatory requirements, requested payment and withdrawal limits, and requested services. Therefore, different registration options may be offered, presenting different barriers of entry for the user. First, the user obtains and installs the mobile application on his or her mobile device 11 in a matter known as such. Within the application the desired user level is chosen and the required information is provided. In the context of the embodiment of a system and an inventive method described below, the following options are offered:
1. No registration: anyone can receive payments on their mobile phone number, email address, or Twitter handle, even if they did not sign up to the system. When a registered user issues a payment to a non-registered phone number, email address or Twitter handle, that recipient will receive information that allows them to sign up to the system (with minimalistic information) and use those funds with all the provided services (including virtual ATM cash withdrawal or payments).
2. Regular registration with bank integration: The user downloads the mobile application of the service in a manner known as such. He or she enters the data which is required by their bank to authenticate them. This may include name, postal address, e-mail address, phone number, date of birth and a valid identification document. This might further include a secret access token or one-time-password that the bank provides via their e-banl<ing system to uniquely identify that user and prevent impersonation by an attacker. This also allows for assigning the bank account 211 of the customer with the system. Alternatively, other payment means may be assigned with the user, such as a PayPal account or a direct debiting scheme.
3. Merchant registration with full information: Merchants who would like to offer the virtual ATM service, will undergo full Know Your Customer identification (including physical verification) and send the required information during first loading of the mobile app. In the context of the registration, the merchant will also provide information with respect to its account 221 for receiving payments in exchange for cash withdrawals. The merchant app will only be activated once complete offline verification has been successfully completed by the service provider. This may include sending an activation code by postal mail to the indicated address of the merchant and asking for input of the activation code in the app run on merchant's device.

A transaction is described, wherein a customer withdraws cash at a cash desk of a (physical) store operated by a merchant, offering the services of a "virtual ATM". The same principles apply to transactions where the inventive system is used for payments in exchange of goods or services or where the "virtual ATM" is not provided by a store or other commercial party but by another natural person.

First, the customer retrieves information about the virtual ATM from which they would like to request the withdrawal. This includes not only name and address of the ATM but also an asymmetric public key of that ATM. For that purpose, the customer selects the virtual ATM in the mobile app running on his or her mobile device 11. At the same time, the desired amount of cash is indicated. In return, the mobile device 11 receives the public key of the merchant operating the virtual ATM service.

Next, the customer's mobile app retrieves random and unique image URL from the server 100 of the mobile payment service provider, the URL pointing to an image stored on web-accessible image database 121. The URL is generated by the authentication module 120 and sent to the mobile device 11 using the corresponding interface 101.

While the set of images will be of finite size, the URLs should not be re-used for security reasons. Thus the authentication module 120 generates a new URL for each image request and maps this URL to a randomly chosen image.

The customer's mobile app encrypts the image by using the merchant's encryption public key. The customer's mobile app then broadcasts the withdrawal request which contains desired amount, currency, target virtual ATM identifier and the encrypted image URL.

Unless the customer already holds sufficient electronic currency in their e-money account 111, the system sends a request to the customer's bank 210 for withdrawing the according amount in fiat money from the customer's bank account 211 and transferring it to the pass-through bank account 231 (step 301). This request is sent via API interface 103. Upon completion of the withdrawal, a corresponding amount of electronic currency is stored onto customer's e-money account 111 (step 302).

The merchant receives a withdrawal request including amount and encrypted image URL, decrypts the URL using decryption submodule 24 and an employee working at the cash desk of the store verifies that the image, displayed on the display device 23 of the cash desk 21 is matching what the consumer is showing in person on his or her mobile device 11. Due to the encryption of the image URL with the merchant's public key, only the merchant can view the image but another customer is not able to impersonate the sender of the transaction and steal their physical cash. By using a Diffie-Hellman encryption, both customer and merchant are able to decrypt the image URL using their respective encryption keys.

Upon comparing the images, the employee confirms the withdrawal request, hands out the physical cash (step 303) (which may be put into a physical wallet 12 of the customer) and the merchant automatically receives the customer's tokens credited to their own e-money account 112 (step 304). Optionally, for enhanced privacy, the merchant's mobile app is sending the tokens then to their bank which re-credits these to other addresses controlled by the same merchant.

The following bank working day, the electronic currency is automatically converted into fiat money, the system transferring the accumulated amounts with respect to a certain merchant from the pass-through bank account 231 to the bank account 221 of the merchant (step 305). The corresponding electronic currency on the e-money account 112 is removed from this account (step 306).

If the merchant refuses the withdrawal request, the electronic currency stays with the customer. If the customer does not initiate the conversion into fiat money within a certain time limit the fiat money paid by the customer is automatically refunded to the bank account 211 of the customer (or a PayPal account of the customer) and the electronic currency on e-money account 111 is withdrawn.

It is to be noted that the system may deduct fees for incoming, outgoing and/or e-money transactions. This means that the amounts booked on the different accounts do not need to be strictly identical but may differ by amounts corresponding to the deducted fees. Furthermore, the merchant offering the virtual ATM service may be recompensated by receiving a part of the collected fees.

The system and the inventive method are not restricted to the embodiment described above. Several aspects may be implemented differently. In particular, the succession of steps may be chosen differently, and the information technology infrastructure may have a different structure.

Instead of a blocl<chain (or several blocl<chains), in principle a secured distributed database may be employed.

In summary, it is to be noted that the invention creates a method for effecting financial transactions between a first party and a second party that are secure, reliable and cost-effective.

## Claims

1. System for effecting financial transactions between a customer and a merchant, comprising:
a server (100), a mobile device (11) of a customer, a cash desk (21) of a merchant, the cash desk (21) comprising a display device (23) and a decryption module (24);
a pass-through bank account (231) of a service provider for storing fiat money;
the server (100) comprising:
an API interface (103) allowing for initiating payments from a bank account (211) of the customer of the customer's bank (210) for storing fiat money to the pass-through bank account (231);
a first e-money account (111) for storing electronic currency, the first e-money account (111) being assigned to the customer;
a second e-money account (112) for storing electronic currency, the second e-money account (112) being assigned to the merchant;
a first conversion module (113) for generating electronic currency and storing the electronic currency in the first e-money account (111), the amount corresponding to a fiat money amount transferred from the bank account (221) of the customer to the pass-through bank account (231);
a transfer module (115) for transferring electronic currency from the first e-money account (111) to the second e-money account (112);
a first app interface (101) for interaction with a first application running on the mobile device of the customer and by a second app interface (102) for interaction with a second application running on the cash desk of the merchant;an image store in an image database (121);
an authentication module (120) for generating authentication information to be sent to the first application by the first app interface (101), the authentication module comprising a first submodule for sending a public key assigned to the merchant and a reference to a random image in the image store to the mobile device of the customer; **characterized in that** the customer selects a virtual ATM in the mobile app running on his or her mobile device (11) and indicates the desired amount of cash;
the mobile device (11) receives the public key of the merchant operating the virtual ATM service;
the customer's mobile app retrieves random and unique image URL from the server (100), the URL pointing to an image stored on image database (121);
the customer's mobile app encrypts the image URL by using the merchant's encryption public key and broadcasts the withdrawal request which contains desired amount, currency, target virtual ATM identifier and the encrypted image URL;
unless the customer already holds sufficient electronic currency in their e-money account (111), the system sends a request to the customer's bank (210) for withdrawing the according amount in fiat money from the customer's bank account (211) and transferring it to the pass-through bank account (231), the request being sent via API interface (103); upon completion of the withdrawal, a corresponding amount of electronic currency is stored onto customer's e-money account (111);
the cash desk (21) receives the withdrawal request including amount and encrypted image URL, decrypts the URL using decryption submodule (24) and an employee working at the cash desk (21) verifies that the image, displayed on the display device (23) of the cash desk (21) is matching what the consumer is showing in person on his or her mobile device (11);
upon comparing the images, the employee confirms the withdrawal request, hands out the physical cash and the merchant automatically receives the customer's electronic currency credited to their own e-money account (112);
the electronic currency is automatically converted into fiat money, the system transferring the accumulated amounts with respect to a certain merchant from the pass-through bank account (231) to the bank account (221) of the merchant and the corresponding electronic currency on the e-money account (112) is removed from this account.

## Patentansprüche

1. System zum Durchführen von Finanztransaktionen zwischen einem Kunden und einem Händler, umfassend:
einen Server (100), ein mobiles Gerät (11) eines Kunden, eine Kasse (21) eines Händlers, wobei die Kasse (21) eine Anzeigevorrichtung (23) und ein Entschlüsselungsmodul (24) umfasst;
ein Durchleitungsbankkonto (231) eines Dienstanbieters zum Speichern von Fiat-Geld;
wobei der Server (100) umfasst:
eine API-Schnittstelle (103), die es ermöglicht, Zahlungen von einem Bankkonto (211) des Kunden der Bank (210) des Kunden zum Speichern von Fiat-Geld auf das Durchleitungsbankkonto (231) zu veranlassen;
ein erstes E-Geld-Konto (111) zum Speichern von elektronischer Währung, wobei das erste E-Geld-Konto (111) dem Kunden zugewiesen ist;
ein zweites E-Geld-Konto (112) zum Speichern von elektronischer Währung, wobei das zweite E-Geld-Konto (112) dem Händler zugewiesen ist;
ein erstes Umwandlungsmodul (113) zum Erzeugen von elektronischer Währung und zum Speichern der elektronischen Währung auf dem ersten E-Geld-Konto (111), wobei der Betrag einem Fiat-Geld-Betrag entspricht, der vom Bankkonto (221) des Kunden auf das Durchleitungsbankkonto (231) überwiesen wird;
ein Überweisungsmodul (115) zum Überweisen von elektronischer Währung vom ersten E-Geld-Konto (111) auf das zweite E-Geld-Konto (112);
eine erste Anwendungsschnittstelle (101) zur Interaktion mit einer ersten Anwendung, die auf dem mobilen Gerät des Kunden ausgeführt wird, und durch eine zweite Anwendungsschnittstelle (102) zur Interaktion mit einer zweiten Anwendung, die auf der Kasse des Händlers ausgeführt wird; einen Bildspeicher in einer Bilddatenbank (121);
ein Authentifizierungsmodul (120) zum Erzeugen von Authentifizierungsinformationen, die durch die erste Anwendungsschnittstelle (101) an die erste Anwendung zu senden sind, wobei das Authentifizierungsmodul ein erstes Teilmodul zum Senden eines dem Händler zugewiesenen öffentlichen Schlüssels und eines Verweises auf ein Zufallsbild im Bildspeicher an das Mobilgerät des Kunden umfasst; **dadurch gekennzeichnet, dass**
der Kunde in der auf seinem oder ihrem mobilen Gerät (11) ausgeführten Anwendung einen virtuellen Geldautomaten auswählt und den gewünschten Bargeldbetrag angibt;
das mobile Gerät (11) den öffentlichen Schlüssel des Händlers, der den virtuellen Geldautomatendienst betreibt, empfängt;
die mobile Anwendung des Kunden eine zufällige und eindeutige Bild-URL vom Server (100) abruft, wobei die URL auf ein in der Bilddatenbank (121) gespeichertes Bild verweist;
die mobile Anwendung des Kunden die Bild-URL unter Verwendung des öffentlichen Verschlüsselungsschlüssels des Händlers verschlüsselt und die Abhebungsanforderung, die den gewünschten Betrag, die Währung, die Kennung des virtuellen Ziel-Geldautomaten und die verschlüsselte Bild-URL enthält, rundsendet;
sofern der Kunde nicht bereits über ausreichend elektronische Währung auf seinem E-Geld-Konto (111) verfügt, das System eine Anforderung an die Bank (210) des Kunden zum Abheben des entsprechenden Betrags in Fiat-Geld vom Bankkonto (211) des Kunden und zum Überweisen auf das Durchleitungsbankkonto (231) sendet, wobei die Anforderung über die API-Schnittstelle (103) gesendet wird; nach Abschluss der Abhebung ein entsprechender Betrag an elektronischer Währung auf dem E-Geld-Konto des Kunden (111) gespeichert wird; die Kasse (21) die Abhebungsanforderung einschließlich des Betrags und der verschlüsselten Bild-URL empfängt, die URL unter Verwendung des Entschlüsselungsteilmoduls (24) entschlüsselt und ein an der Kasse (21) arbeitender Angestellter verifiziert, dass das auf der Anzeigevorrichtung (23) der Kasse (21) angezeigte Bild mit dem übereinstimmt, was der Verbraucher persönlich auf seinem oder ihrem mobilen Gerät (11) vorzeigt;
nach dem Vergleichen der Bilder der Angestellte die Abhebungsanforderung bestätigt, das physische Bargeld aushändigt und der Händler automatisch die elektronische Währung des Kunden empfängt, die seinem eigenen E-Geld-Konto gutgeschrieben (112) wird;
die elektronische Währung automatisch in Fiat-Geld umgewandelt wird, wobei das System die kumulierten Beträge in Bezug auf einen gewissen Händler vom Durchleitungsbankkonto (231) auf das Bankkonto (221) des Händlers überweist und die entsprechende elektronische Währung auf dem E-Geld-Konto (112) von diesem Konto entfernt wird.

## Revendications

1. Système pour la réalisation de transactions financières entre un client et un commerçant, comprenant :
un serveur (100), un dispositif mobile (11) d'un client, une caisse (21) d'un commerçant, la caisse (21) comprenant un dispositif d'affichage (23) et un module de déchiffrement (24) ;
un compte bancaire de transit (231) d'un fournisseur de services pour stocker de la monnaie fiduciaire ;
le serveur (100) comprenant :
une interface API (103) permettant d'initier des paiements depuis un compte bancaire (211) du client de la banque du client (210) pour stocker de la monnaie fiduciaire sur le compte bancaire de transit (231) ;
un premier compte d'argent électronique (111) pour stocker de la monnaie électronique, le premier compte d'argent électronique (111) étant attribué au client ;
un deuxième compte d'argent électronique (112) pour stocker de la monnaie électronique, le deuxième compte d'argent électronique (112) étant attribué au commerçant ;
un premier module de conversion (113) pour générer de la monnaie électronique et stocker la monnaie électronique dans le premier compte d'argent électronique (111), le montant correspondant à un montant en monnaie fiduciaire transféré depuis le compte bancaire (221) du client vers le compte bancaire de transit (231) ;
un module de transfert (115) pour transférer de la monnaie électronique du premier compte d'argent électronique (111) vers le deuxième compte d'argent électronique (112) ;
une première interface app (101) pour interagir avec une première application s'exécutant sur le dispositif mobile du client et une deuxième interface app (102) pour interagir avec une deuxième application s'exécutant sur la caisse du commerçant ;
un magasin d'images dans une base de données d'images (121) ;
un module d'authentification (120) pour générer des informations d'authentification destinées à être envoyées à la première application par la première interface app (101), le module d'authentification comprenant un premier sous-module pour envoyer au dispositif mobile du client une clé publique attribuée au commerçant et une référence à une image aléatoire dans le magasin d'image ;
**caractérisé en ce que**
le client sélectionne un GAB virtuel dans l'application mobile s'exécutant sur son dispositif mobile (11) et indique le montant d'argent comptant souhaité ;
le dispositif mobile (11) reçoit la clé publique du commerçant exploitant le service de GAB virtuel ;
l'application mobile du client récupère une URL d'image aléatoire et unique auprès du serveur (100), l'URL pointant vers une image stockée sur la base de données d'images (121) ;
l'application mobile du client chiffre l'URL de l'image en utilisant la clé publique de chiffrement du commerçant et diffuse la demande de retrait qui contient le montant souhaité, la monnaie, l'identifiant du GAB virtuel cible et l'URL d'image chiffrée ;
à moins que le client ne détienne déjà suffisamment de monnaie électronique sur son compte d'argent électronique (111), le système envoie une demande à la banque du client (210) pour retirer le montant indiqué en monnaie fiduciaire du compte bancaire du client (211) et le transférer au compte bancaire de transit (231), la demande étant envoyée via l'interface API (103) ;
lors de l'achèvement du retrait, un montant correspondant de monnaie électronique est stocké sur le compte d'argent électronique du client (111) ;
la caisse (21) reçoit la demande de retrait incluant le montant et l'URL d'image chiffrée, déchiffre l'URL en utilisant le sous-module de déchiffrement (24) et un employé travaillant à la caisse (21) vérifie que l'image, affichée sur le dispositif d'affichage (23) de la caisse (21), correspond à ce que le client lui montre en personne sur son dispositif mobile (11) ;
après comparaison des images, l'employé confirme la demande de retrait, donne l'argent physique et le commerçant reçoit automatiquement la monnaie électronique du client créditée sur son propre compte d'argent électronique (112) ;
la monnaie électronique est automatiquement convertie en monnaie fiduciaire, le système transférant les montants cumulés concernant un certain commerçant du compte bancaire de transit (231) vers le compte bancaire (221) du commerçant et le montant correspondant de monnaie électronique sur le compte d'argent électronique (112) étant retirée de ce compte.
